# EUROPÄISCHE PATENTSCHRIFT

(11) **EP 1 649 575 B1**
(45) Veröffentlichungstag und Bekanntmachung des Hinweises auf die Patenterteilung: **10.06.2009**
(21) Anmeldenummer: 04741255.6
(22) Anmeldetag: 23.07.2004
(51) Int. Cl.: H02K 1/32

(54) **ELEKTRISCHE MASCHINE MIT LÄUFERKÜHLUNG**
ELECTRIC MACHINE WITH ROTOR COOLING
MACHINE ELECTRIQUE A REFROIDISSEMENT DE ROTOR

(30) Priorität: 01.08.2003 DE 10335038
(43) Veröffentlichungstag der Anmeldung: 26.04.2006
(73) Patentinhaber: SIEMENS AKTIENGESELLSCHAFT, 80333 München (DE)
(72) Erfinder: SCHMIDT, Valerias, 90471 Nürnberg (DE)
(86) Internationale Anmeldenummer: PCT/EP2004/008298
(87) Internationale Veröffentlichungsnummer: WO 2005/013459

(56) Entgegenhaltungen:
- WO-A-02/071578
- DE-C- 158 006
- DE-C1- 10 107 298
- FR-A- 1 350 043
- US-A- 5 889 342
- US-A- 5 925 960
- PATENT ABSTRACTS OF JAPAN Bd. 1997, Nr. 08, 29. August 1997 (1997-08-29) -& JP 09 093868 A (TOYO ELECTRIC MFG CO LTD), 4. April 1997 (1997-04-04)
- PATENT ABSTRACTS OF JAPAN Bd. 2002, Nr. 08, 5. August 2002 (2002-08-05) -& JP 2002 125352 A (MITSUBISHI ELECTRIC CORP), 26. April 2002 (2002-04-26)
- PATENT ABSTRACTS OF JAPAN Bd. 009, Nr. 089 (E-309), 18. April 1985 (1985-04-18) & JP 59 220046 A (TOSHIBA KK), 11. Dezember 1984 (1984-12-11)

## Beschreibung

Die vorliegende Erfindung betrifft eine Läufervorrichtung mit einer Blechpaketanordnung, die über mehrere axiale Bohrungen zum Durchleiten eines Kühlmittels verfügt, und zwei Läuferdruckringen, zwischen denen die Blechpaketanordnung axial fixiert ist. Darüber hinaus betrifft die vorliegende Erfindung eine elektrische Maschine mit einer derartigen Läufervorrichtung sowie ein entsprechendes Verfahren zum Kühlen einer Läufervorrichtung.

Bei elektrischen Maschinen höherer Leistung ist häufig eine Läuferkühlung notwendig. Eine entsprechende elektrische Maschine ist beispielsweise aus dem Dokument US 2 610 992 bekannt. Die dort beschriebenen Ständer- und Läuferblechpakete weisen axial verlaufende Luftkühlkanäle auf.

Um die Lüftung in axialer Richtung gleichmäßiger auszuführen, kann eine beidseitige Belüftung des Läufers vorgesehen sein. In der deutschen Offenlegungsschrift DE 44 13 389 ist beispielsweise eine solche elektrische Maschine beschrieben. Sie besitzt zwei auf einer gemeinsamen Welle in axialem Abstand voneinander angeordnete Rotorblechpakete, zwei in entsprechendem Abstand voneinander angeordnete Statorblechpakete und eine Kühleinrichtung, die eine Luftfördereinrichtung sowie in axialer Richtung verlaufende Kühlkanäle aufweist. Letztere sind in Folge des axialen Abstands der Blechpakete je in zwei Abschnitte unterteilt und derart mit der Luftfördereinrichtung verbunden, dass die beiden Abschnitte jedes Kühlkanals in entgegengesetzter Richtung durchströmt werden. In dem Ringraum zwischen den Blechpaketen wird die Kühlluft aus einer axialen Richtung in eine radiale Richtung oder umgekehrt umgelenkt. Der axiale Abstand der Blechpakete ist dabei so gewählt, dass der im Ringraum zwischen den Blechpaketen für die Kühlluft zur Verfügung stehende Strömungsquerschnitt etwa gleich der Summe der Strömungsquerschnitte aller in diesem Ringraum unmittelbar mündenden Kühlkanäle ist. Diese Art der gegenläufigen Kühlung ist jedoch sehr aufwändig.

Ferner ist aus der Druckschrift US 5 889 342 ein Motorkühlsystem bekannt, bei dem ein Läuferdruckring zur Verteilung eines Kühlmittels in axial verlaufenden Kühlkanälen des Läufers verwendet wird. Dabei strömt das Kühlmittel durch entsprechende Passagen in dem Läuferdruckring aus der Hohlwelle radial nach außen und wird in axiale Richtung in die entsprechenden Aussparungen des Läufers umgelenkt.

Aus der Druckschrift JP 2002 125352 A ist darüber hinaus ein Motor bekannt, dessen Läuferdruckringe auch zur Kühlmittelführung herangezogen werden. Der Läuferdruckring auf der einen Seite des Rotors weist axiale Bohrungen auf, während der Läuferdruckring auf der gegenüberliegenden Seite schräg nach außen geführte Kühlmittelführungswände besitzt. Durch letztere wird der axial verlaufende Kühlstrom durch den Rotor in radialer Richtung umgelenkt.

Des Weiteren ist in der Patentschrift DE 101 07 298 C1 eine geschlossene elektrische Maschine mit Oberflächenkühlung beschrieben. Sie besitzt einen geschlossenen inneren Kühlmedienkreislauf über dem Rotorkörper. Kühlmedienkanäle auf unterschiedlichen Teilkreisen des Rotorkörperquerschnitts sind für Vorwärts- und Rückwärts-Strömungsrichtung vorhanden. Der Kühlmedienkreislauf wird entweder über als Verteil- und Fördereinrichtung dienende Adapter oder einseitig innerhalb des Kurzschlussrings geschlossen.

Die Aufgabe der vorliegenden Erfindung besteht somit darin, eine Läufervorrichtung vorzuschlagen, die durch einen verhältnismäßig kostengünstigen Aufbau gegenläufig kühlbar ist. Ferner soll ein entsprechendes Kühlverfahren angegeben werden.

Erfindungsgemäß wird diese Aufgabe gelöst durch eine Läufervorrichtung nach Anspruch 1.

In vorteilhafer Weise ist damit eine Trennung der Lufteintrittslöcher von den Luftaustrittslöchern der Läuferkühlführung bei einer gegenläufigen Kühlung verhältnismäßig kostengünstig zu erreichen. Der oder die Läuferdruckringe können nämlich in die Luftführungseinrichtung integriert werden.

Vorzugsweise sind die axialen Bohrungen durch mindestens eine der beiden Läuferdruckringe zu mehreren Gruppen zusammengefasst, so dass der Kühlmittelstrom durch die Bohrungen jeder Gruppe im Wesentlichen gleich ist. Durch die Gruppierung der einzelnen Bohrungen wird die Kühlmittelströmung verbessert. Beispielsweise können in jeder Gruppe jeweils zwei, drei oder vier Bohrungen, aber auch beliebig mehr, zusammengefasst werden.

Die gezielte Kühlmittelführung kann ferner so ausgestaltet sein, dass die Bohrungen oder Gruppen von Bohrungen untereinander gegenläufig gekühlt werden. Dies führt zu einer gleichmäßigeren Kühlung des Läufers in axialer Richtung.

Des Weiteren können an vorgegebenen Kanten des mindestens einen Läuferdruckrings Radien zur Verbesserung der Kühlmittelströmung angebracht, insbesondere angegossen, werden.

Bei einer besonders vorteilhaften Ausführungsform kann der mindestens eine Läuferdruckring als Lüfter ausgestaltet sein. Damit besitzt der Läuferdruckring die dreifache Funktionalität: Zusammenpressen des Blechpakets, Führen des Kühlmittelstroms und Fördern des Kühlmittelstroms. Dabei ist es weiter von Vorteil, wenn der mindestens eine Läuferdruckring einstückig ausgeführt ist. Somit entstehen keine hohen Herstellungskosten des Läuferdruckrings aufgrund vieler Einzelteile, Schweiß- oder Lötvorgänge. Wird der mindestens eine Läuferdruckring darüber hinaus aus Sphäroguss gefertigt, so führt dies gegenüber herkömmlichen Lösungen zu Gewichtsvorteilen.

Zwei Läuferdruckringe ähnlicher Gestalt können auf einer gemeinsamen Achse um eine Bohrung oder eine Gruppe von Bohrungen in Umfangsrichtung versetzt angeordnet sein. Dadurch kann eine gegenläufige Kühlung mit geringem Kostenaufwand erzielt werden.

Vorzugsweise wird eine elektrische Maschine und insbesondere ein Elektromotor mit der geschilderten erfindungsgemäßen Läufervorrichtung ausgestattet.

Die vorliegende Erfindung wird nun anhand der beigefügten Zeichnungen näher erläutert, in denen zeigen:
- FIG 1: eine Draufsicht auf einen erfindungsgemäßen Läuferdruckring;
- FIG 2: einen Schnitt A - A durch den Läuferdruckring von FIG 1;
- FIG 3: einen Querschnitt B - B durch den Läuferdruckring von FIG 2;
- FIG 4: eine Teilquerschnittsansicht durch eine elektrische Maschine mit erfindungsgemäßer Läuferkühlung;
- FIG 5: eine Draufsicht auf einen Läuferdruckring, der das Gegenstück zu dem Ring gemäß FIG 1 darstellt;
- FIG 6: einen Schnitt A - A durch den Läuferdruckring von FIG 5 und
- FIG 7: einen Querschnitt B - B durch den Läuferdruckring von FIG 6.

Die nachfolgend näher beschriebenen Ausführungsbeispiele stellen bevorzugte Ausführungsformen der vorliegenden Erfindung dar.

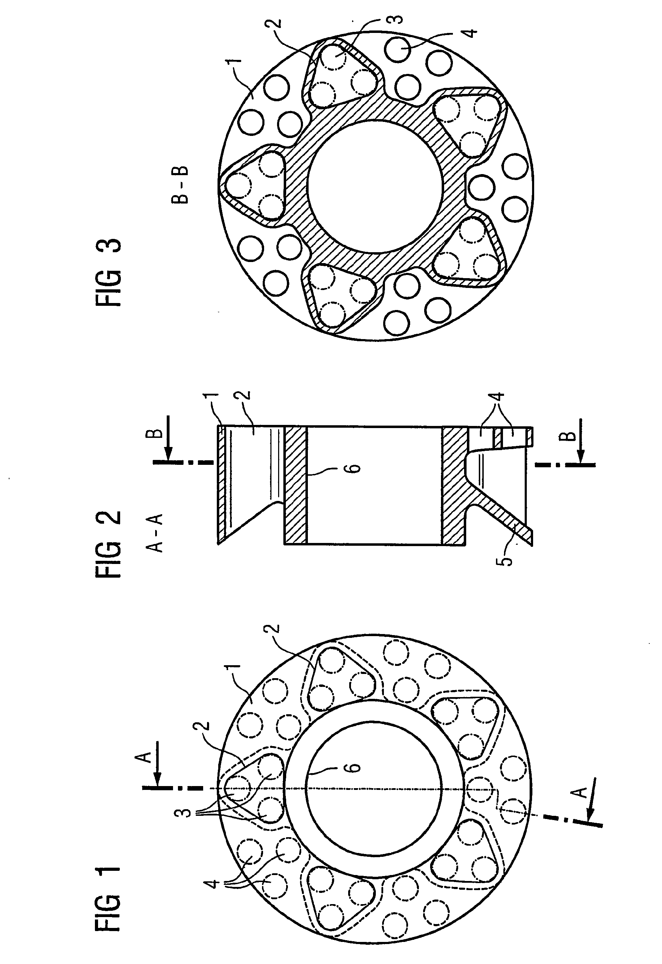

Erfindungsgemäß besitzt der Läuferdruckring eine zusätzliche Funktionalität, nämlich die der Kühlmittelführung durch die axialen Bohrungen des Läufers. Ein entsprechend gestalteter Läuferdruckring 1 ist in FIG 1 in seiner Draufsicht dargestellt. An seinem Umfang sind fünf dreieckförmige Kühlmitteldurchführungen 2 angeordnet. In diesen Kühlmitteldurchlässen 2 sind jeweils drei Bohrungen 3 mit Strichpunktlinie angedeutet, die sich in einem hinter dem Läuferdruckring 1 angeordneten, nicht dargestellten Läufer befinden. Durch die dreieckförmige Durchführung 2 werden somit jeweils drei Löcher bzw. Bohrungen 3 zu einer Lochgruppe zusammengefasst.

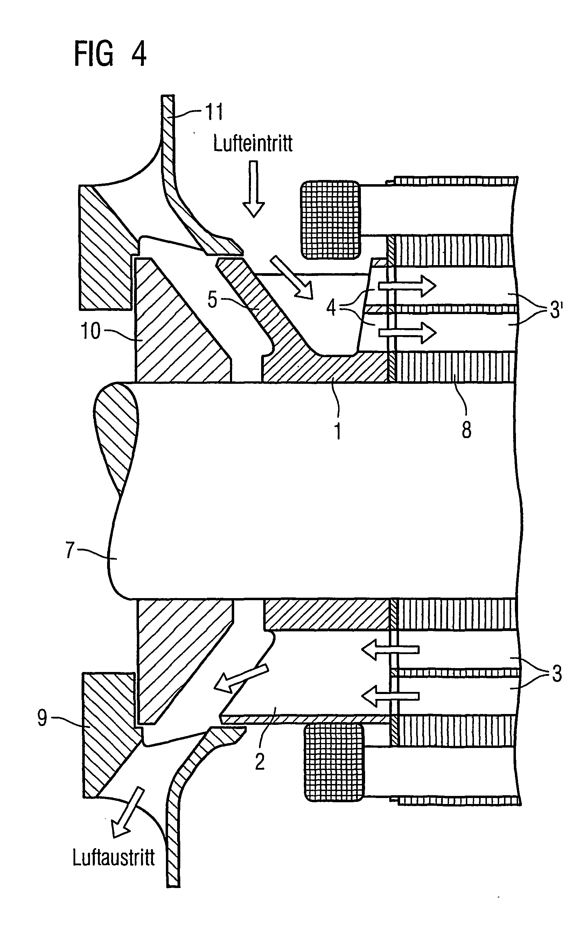

In FIG 2 ist die Kühlmitteldurchführung 2 im Querschnitt dargestellt. Daraus ist ferner ersichtlich, dass die Kontur der Kühlmitteldurchführung 2 in radialer Richtung schräg verläuft. Der Grund hierfür liegt darin, dass aus Gründen der Strömungstechnik ein radial schräg nach außen verlaufender Strömungskanal für das Kühlmittel vorgesehen wird, wie dies näher in Zusammenhang mit FIG 4 erläutert wird.

In Umfangsrichtung zwischen zwei Kühlmitteldurchführungen 2 befinden sich in dem Läuferdruckring 1 jeweils drei Bohrungen 4. Diese dienen zum Kühlmitteleintritt, wenn die Bohrungen 3 der Kühlmitteldurchführung 2 zum Kühlmittelaustritt aus dem Läufer dienen. Wie in FIG 2 dargestellt ist, befinden sich vor den Bohrungen (bezogen auf die Blickrichtung von FIG 1) jeweils schräg verlaufende Kühlmittelführungswände 5, die die Bohrungen 4 verdecken. Die schräg verlaufende Kontur der Kühlmittelführungswand 5 ist hinsichtlich der Strömung beim Kühlmitteleintritt optimiert.

Im Zentrum des Läuferdruckrings befindet sich eine Bohrung 6, die zur Aufnahme einer Welle der elektrischen Maschine dient.

In FIG 3 ist ein Querschnitt des Läuferdruckrings 1 entlang des Schnitts B - B von FIG 2 dargestellt. Darin sind nun die Kühlmittelführungen 2 im Schnitt deutlich zu erkennen. Da die Bohrungen 4 in dieser Ansicht unmittelbar zu sehen sind, sind sie mit durchgezogener Linie wiedergegeben. Die Bohrungen im dahinterliegenden Läufer sind wiederum mit Strichpunktlinien angedeutet.

Anhand von FIG 4 kann die Wirkungsweise des Läuferdruckrings 1 näher erklärt werden. Der Läuferdruckring 1 ist auf einer Welle 7 angeordnet und hält ein Läuferblechpaket 8 zusammen. In dem Läuferblechpaket 8 befinden sich die Bohrungen 3 (untere Hälfte von FIG 4), die in FIG 1 angedeutet sind und mit der Kühlmitteldurchführung 2 in Verbindung stehen. Das Kühlmittel wird gemäß den wiedergegebenen Pfeilen aus den Bohrungen 3 durch die Kühlmitteldurchführung 2 in eine statische Luftaustrittsöffnung 9 befördert. Ein kegelstumpfförmiges Führungselement 10 lenkt den Kühlmittelstrom von der Kühlmitteldurchführung 2 in die Luft- bzw. Kühlmittelaustrittsöffnung 9.

An der radial gegenüberliegenden Seite des Läufers (obere Hälfte von FIG 4) befinden sich Bohrungen 3', die mit den Bohrungen 4 des Läuferdruckrings 1 in Verbindung stehen. Über eine Kühlmitteleintrittsdüse 11, die gegenüber dem Läufer still steht, und der Kühlmittelführungswand 5 des Läuferdruckrings 1 wird das Kühlmittel wiederum entsprechend den Pfeilen in die Bohrungen 3' des Läufers geschickt.

An dem anderen Ende des Läuferblechpakets 8, das in FIG 4 nicht dargestellt ist, befindet sich ebenfalls ein Läuferdruckring mit ähnlicher Gestalt wie der eben beschriebene.

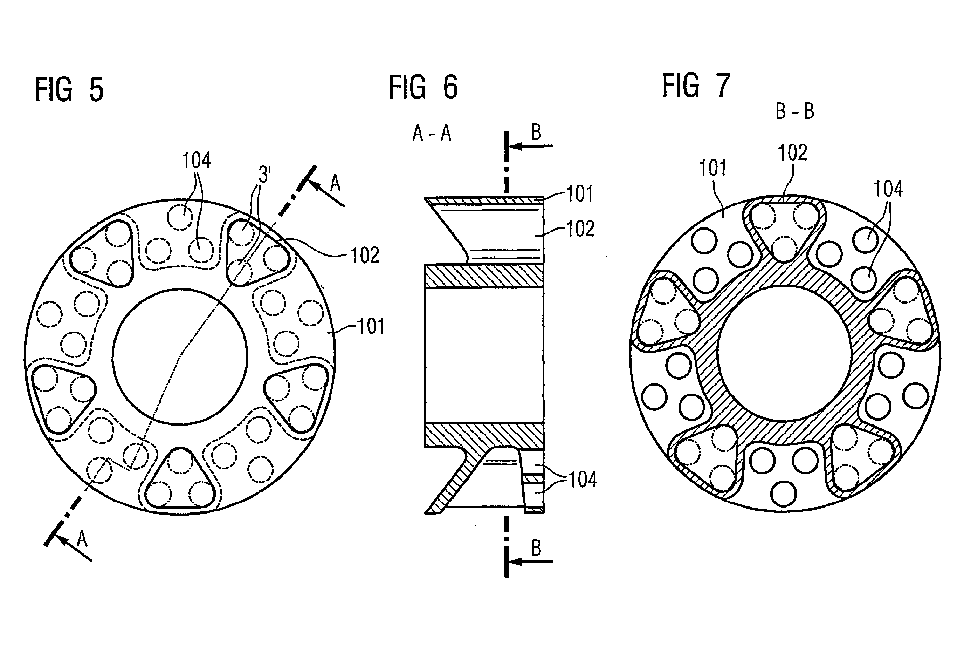

In FIG 5 ist ein derartiger Läuferdruckring ebenso wie FIG 1 in der Draufsicht dargestellt. In seiner Position in Umfangsrichtung ist er so dargestellt, wie er als Gegenstück zu dem Läuferdruckring von FIG 1 montiert werden würde. Dies bedeutet, dass die Bohrungen 104 des Läuferdruckringgegenstücks 101 mit den in FIG 1 angedeuteten Bohrungen 3 des Läufers in der Kühlmitteldurchführung 2 in Verbindung stehen. Ebenso kommunizieren die in den Kühlmitteldurchführungen 102 mittels Strichpunktlinie angedeuteten Bohrungen 3' mit den Bohrungen 4, die durch die Kühlmittelführungswände 5 des Läuferdruckrings 1 in FIG 1 verdeckt sind.

In FIG 6 ist der Schnitt A - A durch den Läuferdruckring 101 dargestellt. Der Schnitt ist gegenüber dem von FIG 1 jedoch um 36° versetzt. Das Schnittbild ist mit dem von FIG 2 identisch.

In FIG 7 ist wiederum ein Schnitt entlang der Linie B - B von FIG 6 dargestellt. Am Umfang verteilt sind auch hier Kühlmitteldurchführungen 102 in Dreiecksform erkennbar. Die Spitzen der Dreiecke weisen im Gegensatz zu den Dreiecken von FIG 3 nach innen. Diese Gestalt hat somit kaum eine Lüfterwirkung.

Zwischen den dreieckförmigen Kühlmitteldurchführungen 102 sind wiederum jeweils drei Bohrungen 104 angeordnet.

Da der Läuferdruckring 101 gegenüber dem Läuferdruckring 101 in Umfangrichtung um eine Lochgruppe, d. h. um drei Bohrungen versetzt ist, sind die Bohrungen 3' an ihrem einen Ende gemäß FIG 4 mit dem Kühlmitteleintritt und an ihrem anderen Ende mit dem Kühlmittelaustritt verbunden. Entsprechendes gilt für die Bohrungen 3 am Kühlmittelaustritt von FIG 4. Auf diese Weise kann eine gegenläufige Kühlung ohne hohen konstruktiven Aufwand erzielt werden.

Durch die Kühlmitteldurchführungen 2 ergibt sich eine sternförmige Gestalt des Läuferdruckrings 1. Hierdurch wird eine Lüfterwirkung erzielt, die das Kühlmittel in jeder Dreherichtung radial nach außen fördert.

Mit Hilfe der Kühlmitteldurchführungen 2 bzw. 102 können jedoch auch Lochgruppen mit zwei, vier oder mehr Löchern bzw. Bohrungen gebildet werden. Bei Lochgruppen mit zwei oder vier Bohrungen der gewählten Bohrungsanordnung können die Wände der Kühlmitteldurchführungen ebenfalls schräg nach außen ausgebildet werden, so dass sich zumindest in einer Drehrichtung ein Schaufelrad zur Kühlmittelförderung ergibt.

Zur Erzielung einer gegenläufigen Kühlung ist es jedoch nicht notwendig, dass die Löcher bzw. Bohrungen zu Gruppen zusammengefasst werden. Vielmehr kann hinter einer Kühlmitteldurchführung auch nur eine einzige Bohrung 3 im Läuferblechpaket 8 vorgesehen sein. Die Trennung der Kühlmittelströme erfolgt auch hier durch die Wände der Kühlmitteldurchführung 2 und die Kühlmittelführungswand 5.

Darüber hinaus ist die vorliegende Erfindung auch bei Läufern anwendbar, deren Kühlungsbohrungen in ein sowie drei oder mehr radial übereinander angeordneten Bohrungsreihen angeordnet sind.

## Patentansprüche

1. Läufervorrichtung mit
- einer Blechpaketanordnung (8), die über mehrere axiale Bohrungen (3,3') zum Durchleiten eines Kühlmittels verfügt, und
- zwei Läuferdruckringen (1,101), zwischen denen die Blechpaketanordnung (8) axial fixiert ist, wobei
- mindestens einer der beiden Läuferdruckringe (1,101) zur gezielten Kühlmittelführung durch die axialen Bohrungen (3,3') ausgestaltet ist, und
- an dem mindestens einen Läuferdruckring (1,101) mehrere Kühlmittelführungswände (5) schräg nach außen ragen, so dass sie jeweils eine oder mehrere der Bohrungen (3,3') in axialer Richtung verdecken, wobei
- die Kühlmittelführungswände (5) zum Kühlmitteleintritt oder -austritt dienen, und wobei
- in demselben mindestens einen Läuferdruckring (1,101) in Umfangsrichtung verteilt mehrere axial verlaufende Kühlmitteldurchführungen (2) angeordnet sind, die entsprechend zum Kühlmittelaustritt oder -eintritt dienen,
**dadurch gekennzeichnet, daß** jeweils eine der mehreren schrägen Kühlmittelführungswände (5) in Umfangsrichtung jeweils zwischen zwei der Kühlmitteldurchführungen (2) angeordnet ist, so dass die Läufervorrichtung gegenläufig gekühlt wird.

2. Läufervorrichtung nach Anspruch 1, wobei die axialen Bohrungen (3, 3') durch mindestens eine der beiden Läuferdruckringe (1, 101) zu mehreren Gruppen zusammengefasst sind, so dass der Kühlmittelstrom durch die Bohrungen (3, 3') einer Gruppe im Wesentlichen gleich ist.

3. Läufervorrichtung nach Anspruch 2, wobei in einer Gruppe jeweils zwei, drei oder vier Bohrungen (3, 3') zusammengefasst sind.

4. Läufervorrichtung nach einem der vorhergehenden Ansprüche, wobei die Bohrungen (3, 3') oder Gruppen von Bohrungen (3, 3') untereinander gegenläufig kühlbar sind.

5. Läufervorrichtung nach einem der vorhergehenden Ansprüche, wobei an vorgegebenen Kanten des mindestens einen Läuferdruckrings (1, 101) Radien zur Verbesserung der Kühlmittelströmung angebracht oder angegossen sind.

6. Läufervorrichtung nach einem der vorhergehenden Ansprüche, wobei der mindestens eine Läuferdruckring (1) als Lüfter ausgestaltet ist.

7. Läufervorrichtung nach Anspruch 6, wobei der mindestens eine Läuferdruckring (1, 101) einstückig ausgeführt ist.

8. Läufervorrichtung nach einem der vorhergehenden Ansprüche, wobei der mindestens eine Läuferdruckring (1, 101) aus Sphäroguss gefertigt ist.

9. Läufervorrichtung nach einem der vorhergehenden Ansprüche, wobei die beiden Läuferdruckringe (1) einen ähnlichen Aufbau besitzen und auf einer gemeinsamen Achse um eine Bohrung oder eine Gruppe von Bohrungen (3, 3') in Umfangsrichtung versetzt angeordnet sind.

10. Elektrische Maschine mit einer Läufervorrichtung nach einem der Ansprüche 1 bis 9.

## Claims

1. Rotor device, with
- a laminated core arrangement (8), which has a plurality of axial bores (3, 3') for the conduction of a coolant, and
- two rotor pressure rings (1, 101), between which the laminated core arrangement (8) is fixed axially,
- at least one of the two rotor pressure rings (1, 101) being configured for the targeted routing of coolant through the axial bores (3, 3'), and
- on the at least one rotor pressure ring (1, 101) a plurality of coolant guide walls (5) projecting obliquely outwards, so that they in each case conceal one or more of the bores (3, 3') in the axial direction,
- the coolant guide walls (5) serving for coolant inflow or outflow, and
- there being arranged, distributed circumferentially, in the same at least one rotor pressure ring (1, 101) a plurality of axially running coolant leadthroughs (2) which serve correspondingly for coolant outflow or inflow,
**characterized in that**
- in each case one of the plurality of oblique coolant guide walls (5) is arranged circumferentially in each case between two of the coolant leadthroughs (2), so that the rotor device is cooled contradirectionally.

2. Rotor device according to Claim 1, the axial bores (3, 3') being combined into a plurality of groups by means of at least one of the two rotor pressure rings (1, 101), so that the coolant stream through the bores (3, 3') of a group is essentially identical.

3. Rotor device according to Claim 2, in each case two, three or four bores (3, 3') being combined in a group.

4. Rotor device according to one of the preceding claims, the bores (3, 3') or groups of bores (3, 3') being coolable contradirectionally with respect to one another.

5. Rotor device according to one of the preceding claims, radii for improving the coolant flow being formed or cast on at predetermined edges of the at least one rotor pressure ring (1, 101).

6. Rotor device according to one of the preceding claims, the at least one rotor pressure ring (1) being configured as a fan.

7. Rotor device according to Claim 6, the at least one rotor pressure ring (1, 101) being produced in one piece.

8. Rotor device according to one of the preceding claims, the at least one rotor pressure ring (1, 101) being manufactured from spherulitic graphite iron.

9. Rotor device according to one of the preceding claims, the two rotor pressure rings (1) possessing a similar construction and being arranged on a common axis about a bore or a group of bores (3, 3') so as to be offset in the circumferential direction.

10. Electric machine having a rotor device according to one of Claims 1 to 9.

## Revendications

1. Dispositif rotorique comprenant
- un paquet ( 8 ) de tôles, qui dispose de plusieurs trous ( 3, 3' ) axiaux pour le passage d'un fluide de refroidissement, et
- deux anneaux ( 1, 101 ) de compression de rotor entre lesquels le paquet ( 8 ) de tôles est immobilisé axialement, dans lequel
- au moins l'un des deux anneaux ( 1, 101 ) de compression de rotor est conformé pour bien faire passer le fluide de refroidissement dans les trous ( 3, 3' ) axiaux,
- sur le au moins un anneau ( 1, 101 ) de rotor de compression, plusieurs parois ( 5 ) de guidage du fluide de refroidissement font saillie vers l'extérieur en étant inclinées de manière à recouvrir respectivement un ou plusieurs des trous ( 3, 3' ) dans la direction axiale, dans lequel
- les parois ( 5 ) de guidage du fluide de refroidissement servent à l'entrée ou à la sortie du fluide de refroidissement, et dans lequel
- dans le même au moins un anneau ( 1, 101 ) du rotor de compression sont réparties dans la direction périphérique plusieurs traversées ( 2 ) s'étendant axialement pour le fluide de refroidissement, traversées qui servent de manière correspondante à la sortie ou à l'entrée du fluide de refroidissement, **caractérisé en ce que** respectivement l'une des plusieurs parois ( 5 ) inclinées de guidage du fluide de refroidissement sont disposées dans la direction périphérique, respectivement entre deux traversées ( 2 ) pour le fluide de refroidissement de sorte que le dispositif rotorique est refroidi en sens opposé.

2. Dispositif rotorique suivant la revendication 1, dans lequel les trous ( 3, 3' ) axiaux, passant à travers au moins l'un des deux anneaux ( 1, 101 ) de rotor de compression, sont rassemblés en plusieurs groupes, de sorte que le courant du fluide de refroidissement soit sensiblement le même dans les trous ( 3, 3' ) d'un groupe.

3. Dispositif rotorique suivant la revendication 2, dans lequel dans un groupe sont rassemblés respectivement deux, trois ou quatre trous ( 3, 3' ).

4. Dispositif rotorique suivant l'une des revendications précédentes, dans lequel les trous ( 3, 3' ) ou des groupes de trous ( 3, 3' ) peuvent être refroidis en sens opposé les uns par rapport aux autres.

5. Dispositif rotorique suivant l'une des revendications précédentes, dans lequel, sur des bords prescrits du au moins un anneau ( 1, 101 ) de rotor de compression, sont mis ou coulés des rayons d'amélioration du courant du fluide de refroidissement.

6. Dispositif rotorique suivant l'une des revendications précédentes, dans lequel le au moins un anneau ( 1 ) de rotor de compression est conformé en ventilateur.

7. Dispositif rotorique suivant la revendication 1, dans lequel le au moins un anneau ( 1, 101 ) de rotor de compression est d'une seule pièce.

8. Dispositif rotorique suivant l'une des revendications précédentes, dans lequel le au moins un anneau ( 1, 101 ) de rotor de compression est en fonte à graphite sphéroïdale.

9. Dispositif rotorique suivant l'une des revendications précédentes, dans lequel les deux anneaux ( 1 ) de rotor de compression ont une structure semblable et sont disposés de manière décalée dans la direction périphérique sur un axe commun autour d'un trou ou d'un groupe de trous ( 3, 3' )

10. Machine électrique ayant un dispositif rotorique suivant l'une des revendications 1 à 9.
